# EUROPÄISCHE PATENTSCHRIFT

(11) **EP 0 794 031 B1**
(45) Veröffentlichungstag und Bekanntmachung des Hinweises auf die Patenterteilung: **10.05.2000**
(21) Anmeldenummer: 96118884.4
(22) Anmeldetag: 26.11.1996
(51) Int. Cl.: B23K 26/00, C03B 23/00, C03B 23/043, C03B 23/11, C03B 29/00, C03B 33/085, B23K 26/06

(54) **Verfahren und Vorrichtung zur Bearbeitung von Werkstücken aus festen Materialien**
Process and apparatus for treatment of solid material articles
Procédé et dispositif pour le traitement de corps en matériau solide

(30) Priorität: 09.03.1996 DE 19609199
(43) Veröffentlichungstag der Anmeldung: 10.09.1997
(73) Patentinhaber: Arzneimittel GmbH Apotheker Vetter & Co. Ravensburg, D-88212 Ravensburg (DE)
(72) Erfinder: Vetter, Helmut, 88212 Ravensburg (DE); Staupendahl, Gisbert, Dr., 07745 Jena (DE); Bliedtner, Jens, 07745 Jena (DE)
(74) Vertreter: Dziewior, Joachim, Dipl.-Phys. Dr.

(56) Entgegenhaltungen:
- EP-A- 0 062 484
- EP-A- 0 300 465
- DE-A- 4 034 745
- DE-A- 4 305 106
- DE-A- 19 616 327
- GB-A- 1 433 563
- US-A- 4 146 380
- DATABASE WPI Section Ch, Week 32 Derwent Publications Ltd., London, GB; Class L02, AN 91-230905 XP002049020 & DD 287 892 A (ING. MITTWEIDA)
- DATABASE WPI Section Ch, Week 05 Derwent Publications Ltd., London, GB; Class L01, AN 86-031413 XP002049021 & JP 60 251 138 A (HOYA CORP.) , 11.Dezember 1985

## Beschreibung

Die Erfindung betrifft ein Verfahren zur Bearbeitung von Werkstücken aus festen Materialien, insbesondere von Glas in vorzugsweise rohrförmiger Gestalt für die Anwendung bzw. Verwendung im pharmazeutischen, chemischen oder veterinärmedizinischen Bereich mittels optischer, im sichtbaren oder im spektral angrenzenden Bereich liegender Bearbeitungsstrahlen.

Ferner betrifft die Erfindung eine Vorrichtung zur Durchführung des Verfahrens.

Ein Verfahren und eine Vorrichtung gemäß Oberbegriff des Anspruchs 1 bzw. Anspruchs 6 sind aus der GB-A-1 433 563 bekannt.

Derartige Verfahren sind beispielsweise aus der DE 35 46 001, der DE 42 24 282 oder auch der DE 44 11 037 bekannt.

Die dort beschriebenen Verfahren sind jeweils auf die Durchführung eines speziellen Arbeitsschrittes angepaßt, also beispielsweise auf das Abtrennen oder Materialabtragen an Gläsern. Sind jedoch zusätzliche Arbeitsschritte, wie beispielsweise das Umformen oder Umschmelzen an Kanten erforderlich, so müssen zusätzliche Bearbeitungseinrichtungen vorgesehen und hierzu die Werkstücke gegebenenfalls an andere Bearbeitungsstationen überstellt werden.

Der Erfindung liegt die Aufgabe zugrunde, ein Verfahren der eingangs genannten Art so zu verbessern, daß mehrere, unterschiedliche Bearbeitungsparameter erfordernde Bearbeitungsschritte unmittelbar hintereinander oder gegebenenfalls sogar gleichzeitig durchgeführt werden können, wobei hierfür der apparative Aufwand gering gehalten werden soll.

In verfahrensmäßiger Hinsicht wird diese Aufgabe dadurch gelöst, daß zum Trennen, Bohren oder gezielten Materialabtragen ein erster, entsprechend scharf fokussierter und eine hohe Leistungsdichte aufweisender Bearbeitungsstrahl angewendet wird, und daß zum Umformen, Umschmelzen oder zur Wärmebehandlung ein zweiter Bearbeitungsstrahl mit geringerer Leistungsdichte dient, wobei der zweite Bearbeitungsstrahl entsprechend der Anwendung geringer fokussiert oder auch divergent ist, und daß die beiden Bearbeitungsstrahlen über Ablenkeinheiten so einstellbar sind, daß sie an gleichen oder auch an unterschiedlichen Bearbeitungsorten unter paralleler oder zueinander geneigter Ausrichtung auftreffen.

Der durch die Erfindung erreichte Vorteil besteht im wesentlichen darin, daß die beiden Bearbeitungsstrahlen in ihren Eigenschaften unterschiedlich einstellbar sind, so daß unterschiedliche Bearbeitungsschritte entweder gleichzeitig oder unmittelbar hintereinander durchgeführt werden können. So ist es beispielsweise bei der Bearbeitung von Glasrohren möglich, mit dem ersten Bearbeitungsstrahl kurze Rohrabschnitte abzulängen bzw. abzutrennen, wobei der zweite Bearbeitungsstrahl entweder dazu herangezogen werden kann, eine Erwärmung der Umgebung der Schnittlinie vorzunehmen, um das Auftreten von Spannungen zu vermeiden. Es besteht jedoch ebenso die Möglichkeit, mit dem zweiten Bearbeitungsstrahl das zuvor abgetrennte Ende nachzuwärmen, also quasi zu tempern. Schließlich kann der zweite Bearbeitungsstrahl auch dazu herangezogen werden, zunächst eine Vorwärmung eines bestimmten, durch den ersten Bearbeitungsstrahl anschließend zu bearbeitenden Bereiches vorzunehmen. Durch die freie Einstellbarkeit der Parameter beider Bearbeitungsstrahlen ist hierdurch eine weitgehend universelle Anwendbarkeit gegeben.

In bevorzugter Ausführungsform der Erfindung ist vorgesehen, daß die am jeweiligen Bearbeitungsort auftretenden Wechselwirkungen registriert und zur Steuerung der Betriebsparameter der beiden Bearbeitungsstrahlen sowie einer Spann- und Positioniereinheit dienen. Hierbei werden die Wechselwirkungen zweckmäßigerweise durch Registrierung der ausgesandten optischen Strahlung erfaßt. Dies kann beispielsweise durch Erfassung der im sichtbaren Bereich liegenden Strahlung, ebenso aber auch der IR-Strahlung erfolgen. Auch eine unmittelbare optische Auswertung durch eine Videokamera ist denkbar.

Weiter sieht die Erfindung vor, daß zur Ausbildung von Ausformungen das Material im Bereich der Bearbeitungszone durch den zweiten Bearbeitungsstrahl bis zur Plastizität erwärmt wird und daß anschließend die Ausformung durch ein Umformwerkzeug oder bei einem Hohlkörper, dessen Öffnungen zunächst durch Dichtungselemente geschlossen werden, durch Einpressen von Gas erfolgt.

Beim Abtrennen von beispielsweise Glasrohren sieht die Erfindung vor, daß zur Nachbearbeitung der Schnittfläche von durch den ersten Bearbeitungsstrahl voneinander abgetrennten Teilen, also beispielsweise Glasrohren, diese zunächst auf geringfügigen Abstand voneinander gebracht und dann die Schnittkanten beider Teile gleichzeitig durch den zweiten Beareitungsstrahl nachbearbeitet werden. Durch den gering fokussierten zweiten Bearbeitungsstrahl können also beide entstandenen Schnittkanten gleichzeitig einer Nachbearbeitung unterzogen werden.

In vorrichtungsmäßiger Hinsicht wird die Aufgabe gelöst durch eine Strahlungserzeugungseinheit für zwei Bearbeitungsstrahlen von unterschiedlichen, in weiten Grenzen einstellbaren Strahlungseigenschaften, wobei der erste Bearbeitungsstrahl stark fokussiert ist und eine hohe Leistungsdichte aufweist, während der zweite Bearbeitungsstrahl geringer fokussiert oder divergent ist und eine geringere Leistungsdichte aufweist, ferner durch Ablenkeinheiten, die eine voneinander unabhängige Ablenkung der beiden Bearbeitungsstrahlen in zueinander parallele oder gegeneinander geneigte Ausrichtung erlauben, wobei die Ausrichtung auf einen gemeinsamen oder auf getrennte Bearbeitungsorte erfolgen kann, sowie mit einer Spann- und Positioniereinheit für das zu bearbeitende Werkstück.

In besonders vorteilhafter und daher im Rahmen der Erfindung bevorzugter Ausgestaltung ist die Strahlerzeugungseinheit von einem Laser gebildet und werden die zwei Bearbeitungsstrahlen durch eine Strahlaufteilung erzeugt, wozu ein erster Interferenzmodulator zur Aufspaltung in einen transmittierten und einen reflektierten Strahl vorgesehen ist, wobei der transmittierte Strahl durch Umlenkspiegel in prismenartiger Anordnung reflektiert wird und in entgegengesetzter Richtung nochmals den ersten Interferenzmodulator durchläuft, so daß die beiden Strahlen dann einen spitzen Winkel zwischen sich einschließen, daß ferner ein zweiter Interferenzmodulator vorgesehen ist, an dem der reflektierte Strahl nach Durchlaufen eines Teleskops erneut reflektiert wird und dann den zweiten Bearbeitungsstrahl bildet, und daß ein Umlenkspiegel vorgesehen ist, durch den der doppelt transmittierte Strahl von der anderen Seite des zweiten Interferenzmodulators her zur erneuten Transmission eingestrahlt wird, der anschließend den ersten Bearbeitungsstrahl bildet, wobei der zweite Interferenzmodulator zur Einstellung der Winkellage zwischen den beiden Bearbeitungsstrahlen kippbar gelagert ist.

Um insbesondere die Fokussierung des zweiten Bearbeitungsstrahles beeinflussen zu können, ist das Teleskop zur Veränderung der Abbildungseigenschaften variabel einstellbar.

Weiter sieht die Erfindung jedenfalls für die Bearbeitung von Glasmaterialien vor, daß als Laser ein CO₂-Laser verwendet wird.

Der Interferenzmodulator ist zweckmäßigerweise von einem Fabry-Perot-Interferometer gebildet.

Weiter ist im Rahmen der Erfindung vorgesehen, daß zur Aufnahme der zu bearbeitenden Werkstücke eine Spann- und Positioniereinheit vorgesehen ist, die eine rotatorische und translatorische Bewegung und Positionierung der Werkstücke mit frei wählbaren Geschwindigkeiten erlaubt.

Schließlich kann bei im wesentlichen parallel zur Einspannachse der Spann- und Positioniereinheit geführten Bearbeitungsstrahlen ein in den Strahlengang einschwenkbarer Ablenkspiegel vorgesehen sein.

Im folgenden wird die Erfindung an in der Zeichnung dargestellten Ausführungsbeispielen näher erläutert; es zeigen:
- Fig. 1: die Vorrichtung nach der Erfindung zur Bearbeitung von Werkstücken in schematischer Darstellung,
- Fig. 2: die Anordnung zur Erzeugung von zwei Bearbeitungsstrahlen aus einem Laser,
- Fig. 3: eine Ausgestaltung zur Bearbeitung von Werkstücken an ihrer Stirn- und Mantelfläche,
- Fig. 4: die Anbringung von Ausformungen an zylindrischen Werkstücken,
- Fig. 5: das Trennen und Umschmelzen der Schnittkante an Glasrohren.

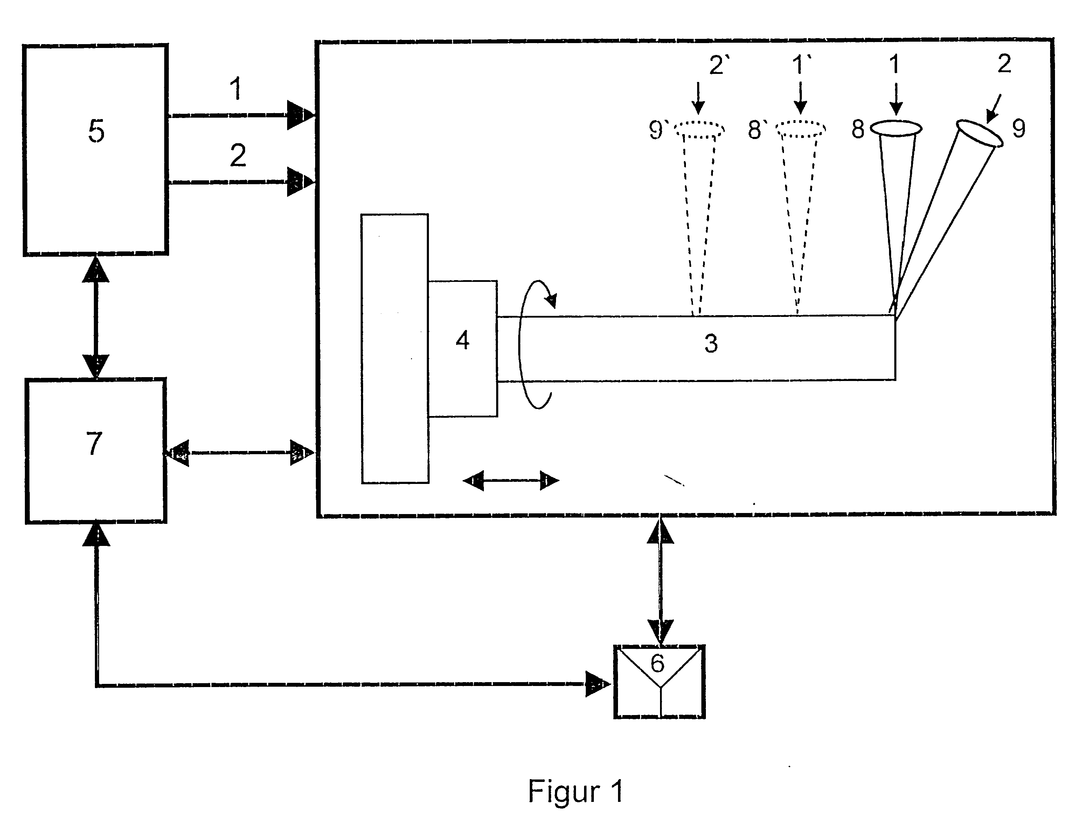

Die in der Zeichnung insbesondere in den Fig. 1 bis 3 dargestellte Vorrichtung dient zur Bearbeitung von Werkstücken aus festen Materialien, insbesondere von Werkstücken 3 aus Glas in vorzugsweise rohrförmiger Gestalt. Derartige Glasröhren finden beispielsweise Anwendung im pharmazeutischen, chemischen oder veterinärmedizinischen Bereich, unter anderem auch bei der Herstellung von Spritzenzylindern.

Die Bearbeitung dieser Glasrohre erfolgt mittels im Infrarotspektrum liegender Bearbeitungsstrahlen 1, 2, da dort der Absorptionsgrad des Glases relativ hoch ist.

Für die Bearbeitungsvorgänge wie Trennen, Bohren oder gezieltes Materialabtragen am Glas ist ein erster, entsprechend scharf fokussierter Bearbeitungsstrahl 1 mit hoher Leistungsdichte vorgesehen, während zum Umformen, Umschmelzen oder zur Wärmebehandlung ein zweiter Bearbeitungsstrahl 2 mit geringerer Leistungsdichte dient. Der zweite Bearbeitungsstrahl 2 ist daher entsprechend der Anwendung geringer fokussiert oder sogar divergent. Die beiden Bearbeitungsstrahlen 1, 2 sind dabei über Ablenkeinheiten 11, 17 so einstellbar, daß sie an gleichen oder auch an unterschiedlichen Bearbeitungsorten auftreffen können. Dabei besteht weiter die Möglichkeit, daß die Bearbeitungsstrahlen 1, 2 parallel oder zueinander geneigt ausgerichtet sind. Die Bearbeitungsstrahlen 1, 2 werden von einer Strahlerzeugungseinheit 5 bereitgestellt.

Wie sich der Fig. 1 entnehmen läßt, ist eine dort nur schematisch wiedergegebene Registriereinrichtung 6 vorgesehen, die die am jeweiligen Bearbeitungsort auftretenden Wechselwirkungen erfaßt und zur Steuerung der Betriebsparameter der beiden Bearbeitungsstrahlen 1, 2 dient. Hierzu ist eine lediglich schematisch angedeutete Steuer- und Regeleinheit 7 vorgesehen. Die auftretenden Wechselwirkungen können dabei vorzugsweise durch Registrierung der ausgesandten optischen Strahlung erfaßt werden, wobei hierfür einerseits der jeweils relevante Spektralbereich erfaßt werden kann oder aber eine unmittelbare bildhafte Erfassung beispielsweise mittels einer Videokamera erfolgen kann.

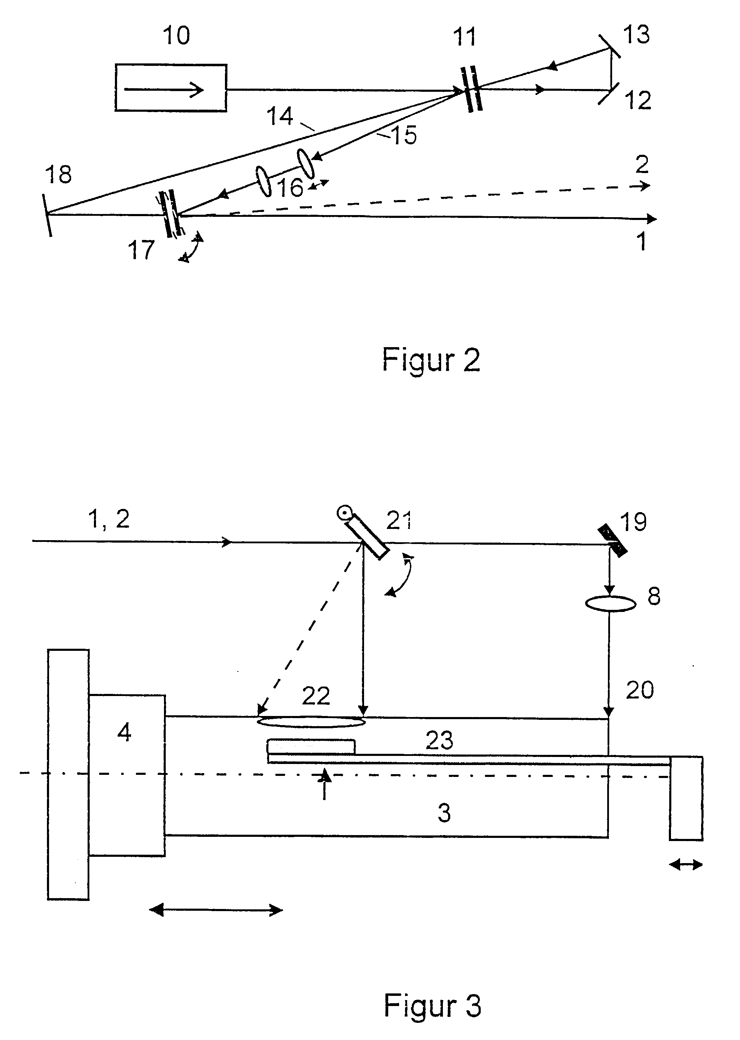

Zur Erzeugung der beiden Bearbeitungsstrahlen 1, 2 ist, wie sich aus der Fig. 2 ersehen läßt, ein erster Interferenzmodulator 11 vorgesehen, der eine Aufspaltung lediglich eines, von einem Laser 10 einfallenden Strahls in einen transmittierten und in einen reflektierten Strahl vornimmt. Der transmittierte Strahl wird durch zwei prismenartig angeordnete Umlenkspiegel 12, 13 reflektiert und in entgegen gesetzter Richtung nochmals durch den ersten Interferenzmodulator 11 geschickt, so daß anschließend der nunmehr doppelt transmittierte Strahl 14 und der reflektierte Strahl 15 einen spitzen Winkel zwischen sich einschließen.

Ferner ist ein zweiter Interferenzmodulator 17 vorgesehen, an dem der reflektierte Strahl 15 erneut reflektiert wird, nachdem er zuvor ein Teleskop 16 durchlaufen hat. Nach der Reflektion an dem zweiten Interferenzmodulator 17 stellt dieser Strahl 15 den zweiten Bearbeitungsstrahl 2 dar. Der doppelt transmittierte Strahl 14 trifft dagegen auf einen weiteren Umlenkspiegel 18, wodurch er von der anderen Seite des zweiten Interferenzmodulators 17 her auf diesen zur erneuten Transmission eingestrahlt wird. Nach Verlassen des zweiten Interferenzmodulators 17 bildet dieser Strahl 14 den ersten Bearbeitungsstrahl 1.

Der zweite Interferenzmodulator 17 ist zur Einstellung der Winkellage zwischen den beiden Bearbeitungsstrahlen 1, 2 kippbar, was durch den bogenförmigen Doppelpfeil in Fig. 2 angedeutet ist.

Das Teleskop 16 ist zur Einstellung der Fokussierung des zweiten Bearbeitungsstrahls variabel ausgebildet. Die beiden Intereferenzmodulatoren 11, 17 sind in in der Zeichnung nicht näher dargestellter Weise als Fabry-Perot-Interferometer ausgebildet.

In Fig. 3 ist eine Spann- und Positioniereinheit 4 zur Aufnahme der zu bearbeitenden Werkstücke 3 angedeutet, die eine rotatorische und translatorische Bewegung und Positionierung der Werkstücke 3 mit im übrigen frei wählbaren Geschwindigkeiten erlaubt. Um dort bei im wesentlichen parallel zur Einspannachse der Spann- und Positioniereinheit 4 geführten Bearbeitungsstrahlen 1, 2 eine Bearbeitung sowohl an der Stirnfläche 20 als auch an der Mantelfläche vornehmen zu können, ist ein Ablenkspiegel 21 vorgesehen, der in den Strahlengang einschwenkbar ist. Der weitere Spiegel 19 zusammen mit der Linse 8 ist dagegen fest angeordnet und dauerhaft auf die Stirnfläche des Werkstückes 3 ausgerichtet.

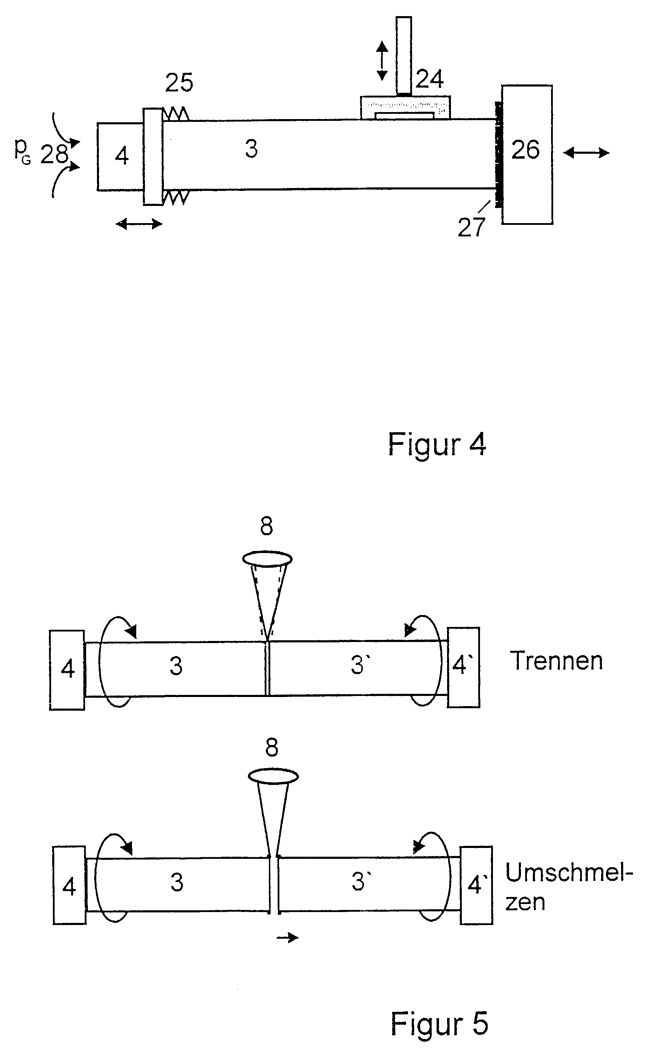

Zur Ausbildung von Ausformungen im Bereich der Mantelfläche des Werkstücks 3, im Falle von Spritzen also der Ausbildung eines einen Überströmkanal bildenden Bypasses, wird, wie dies aus Fig. 3 zu erkennen ist, das Material im Bereich der mit 22 bezeichneten Bearbeitungszone durch den zweiten Bearbeitungsstrahl 2 bis zur Plastizität erwärmt. Anschließend kann die Ausformung durch ein ins Innere des Werkstücks 3 eingeführtes Umformwerkzeug 23 erfolgen, durch das das plastisch gewordene Material ausgeformt wird. Es besteht jedoch auch die in Fig. 4 dargestellte Möglichkeit, durch Einpressen eines Gases bei 28 die Umformung vorzunehmen, nachdem die vorhandenen Öffnungen durch Dichtungselemente 25, 26, 27 geschlossen sind. Ein Formteil 24 kann dabei die Formgebung fördern.

In Fig. 5 ist in der oberen Hälfte zunächst dargestellt, wie das Glasrohr durch den ersten Bearbeitungsstrahl 1 geschnitten wird. Die beiden voneinander getrennten Glasrohre 3, 3' werden anschließend, wie aus der unteren Hälfte der Fig. 5 zu ersehen, mittels einer Spann- und Positioniereinheit 4, 4' auf geringfügigen Abstand voneinander gebracht. Anschließend können die Schnittkanten beider Teile gleichzeitig durch den zweiten Bearbeitungsstrahl 2 nachbearbeitet werden, so daß sich an den Schnittflächen beispielsweise ein Wulst bildet. Hierbei besteht insbesondere auch die Möglichkeit, die bei schnellen Rotationsbewegungen der Glasrohre entstehenden Fliehkräfte zur Umformung mit auszunutzen.

## Patentansprüche

1. Verfahren zur Bearbeitung von Werkstücken (3) aus festen Materialien, insbesondere von Glas in vorzugsweise rohrförmiger Gestalt für die Anwendung bzw. Verwendung im pharmazeutischen, chemischen oder veterinärmedizinischen Bereich mittels optischer, im sichtbaren oder im spektral angrenzenden Bereich liegender Bearbeitungsstrahlen (1, 2), dadurch gekennzeichnet, daß zum Trennen, Bohren oder gezielten Materialabtragen ein erster, entsprechend scharf fokussierter und eine hohe Leistungsdichte aufweisender Bearbeitungsstrahl (1) angewendet wird, und daß zum Umformen, Umschmelzen oder zur Wärmebehandlung ein zweiter Bearbeitungsstrahl (2) mit geringerer Leistungsdichte dient, wobei der zweite Bearbeitungsstrahl (2) entsprechend der Anwendung geringer fokussiert oder auch divergent ist, und daß die beiden Bearbeitungsstrahlen (1, 2) über Ablenkeinheiten (11, 17) so einstellbar sind, daß sie an gleichen oder auch an unterschiedlichen Bearbeitungsorten unter paralleler oder zueinander geneigter Ausrichtung auftreffen.

2. Verfahren nach Anspruch 1, dadurch gekennzeichnet, daß die am jeweiligen Bearbeitungsort auftretenden Wechselwirkungen registriert und zur Steuerung der Betriebsparameter der beiden Bearbeitungsstrahlen sowie einer Spann- und Positioniereinheit (4) dienen.

3. Verfahren nach Anspruch 2, dadurch gekennzeichnet, daß die Wechselwirkungen durch Registrierung der ausgesandten optischen Strahlung erfaßt werden.

4. Verfahren nach den Ansprüchen 1 bis 3, dadurch gekennzeichnet, daß zur Ausbildung von Ausformungen das Material im Bereich der Bearbeitungszone (22) durch den zweiten Bearbeitungsstrahl (2) bis zur Plastizität erwärmt wird und daß anschließend die Ausformung durch ein Umformwerkzeug (23) oder bei einem Hohlkörper, dessen Öffnungen zunächst durch Dichtungselemente (25, 26, 27) geschlossen werden, durch Einpressen von Gas erfolgt.

5. Verfahren nach den Ansprüchen 1 bis 4, dadurch gekennzeichnet, daß zur Nachbearbeitung der Schnittfläche von durch den ersten Bearbeitungsstrahl (1) voneinander abgetrennten Teilen, wie beispielsweise Glasrohre, diese zunächst auf geringfügigen Abstand voneinander gebracht und dann die Schnittkanten beider Teile gleichzeitig durch den zweiten Bearbeitungsstrahl (2) nachbearbeitet werden.

6. Vorrichtung zur Durchführung des Verfahrens nach den Ansprüchen 1 bis 5, wobei eine Strahlerzeugungseinheit (5) für zwei Bearbeitungsstrahlen (1, 2) von unterschiedlichen, in weiten Grenzen einstellbaren Strahlungseigenschaften, wobei der erste Bearbeitungsstrahl (1) stark fokussiert ist und eine hohe Leistungsdichte aufweist, während der zweite Bearbeitungsstrahl (2) geringer fokussiert oder divergent ist und eine geringere Leistungsdichte aufweist, gekennzeichnet durch Ablenkeinheiten (11, 17), die eine voneinander unabhängige Ablenkung der beiden Bearbeitungsstrahlen (1, 2) in zueinander parallele oder gegeneinander geneigte Ausrichtung erlauben, wobei die Ausrichtung auf einen gemeinsamen oder auf getrennte Bearbeitungsorte erfolgen kann, sowie mit einer Spann- und Positioniereinheit (4) für das zu bearbeitende Werkstück (3).

7. Vorrichtung nach Anspruch 6, dadurch gekennzeichnet, daß die Strahlerzeugungseinheit (5) von einem Laser (10) gebildet ist und die zwei Bearbeitungsstrahlen (1, 2) durch eine Strahlaufspaltung erzeugt werden, wozu ein erster Interferenzmodulator (11) zur Aufspaltung in einen transmittierten und einen reflektierten Strahl (14, 15) vorgesehen ist, wobei der transmittierte Strahl (14) durch Umlenkspiegel (12, 13) in prismenartiger Anordnung reflektiert wird und in entgegengesetzter Richtung nochmals den ersten Interferenzmodulator (11) durchläuft, so daß die beiden Strahlen (14, 15) dann einen spitzen Winkel zwischen sich einschließen, daß ferner ein zweiter Interferenzmodulator (17) vorgesehen ist, an dem der reflektierte Strahl (15) nach Durchlaufen eines Teleskops (16) erneut reflektiert wird und dann den zweiten Bearbeitungsstrahl (2) bildet, und daß ein Umlenkspiegel (18) vorgesehen ist, durch den der doppelt transmittierte Strahl (14) von der anderen Seite des zweiten Interferenzmodulators (17) her zur erneuten Transmission eingestrahlt wird, der anschließend den ersten Bearbeitungsstrahl (1) bildet, wobei der zweite Interferenzmodulator (17) zur Einstellung der Winkellage zwischen den beiden Bearbeitungsstrahlen (1, 2) kippbar gelagert ist.

8. Vorrichtung nach Anspruch 7, dadurch gekennzeichnet, daß das Teleskop (16) zur Veränderung der Abbildungseigenschaften variabel einstellbar ist.

9. Vorrichtung nach Anspruch 7 oder 8, dadurch gekennzeichnet, daß als Laser (10) ein CO₂-Laser verwendet wird.

10. Vorrichtung nach einem der Ansprüche 6 bis 9, dadurch gekennzeichnet, daß der Interferenzmodulator (11, 17) von einem Fabry-Perot-Interferometer gebildet ist.

11. Vorrichtung nach einem der Ansprüche 6 bis 10, dadurch gekennzeichnet, daß zur Aufnahme der zu bearbeitenden Werkstücke (3) eine Spann- und Positioniereinheit (4, 4') vorgesehen ist, die eine rotatorische und translatorische Bewegung und Positionierung der Werkstücke (3) mit frei wählbaren Geschwindigkeiten erlaubt.

12. Vorrichtung nach Anspruch 11, dadurch gekennzeichnet, daß bei im wesentlichen parallel zur Einspannachse der Spann- und Positioniereinheit (4) geführten Bearbeitungsstrahlen (1, 2) ein in den Strahlengang einschwenkbarer Ablenkspiegel (21) vorgesehen ist.

## Claims

1. A method of processing workpieces (3) of solid materials, in particular glass of a preferably tubular configuration for application or use in the pharmaceutical, chemical or veterinary medicine sector, by means of optical processing beams (1, 2) which are in the visible or in the spectrally adjoining range, characterised in that a first, suitably sharply focussed processing beam (1) having a high power density is used for cutting, boring or targetedly removing material, and that a second processing beam (2) of lower power density serves for shaping, re-melting or for heat treatment, wherein the second processing beam (2) according to the use is focussed to a lesser degree or is even divergent, and that the two processing beams (1, 2) can be so set by way of deflection units (11, 17) that they impinge at the same or at different processing locations in parallel or mutually inclined orientation.

2. A method according to claim 1 characterised in that the interactions occurring at the respective processing location are registered and serve for control of the operating parameters of the two processing beams and a clamping and positioning unit (4).

3. A method according to claim 2 characterised in that the interactions are detected by registration of the emitted optical radiation.

4. A method according to claims 1 to 3 characterised in that for the formation of shaped-out portions the material in the region of the processing zone (22) is heated to plasticity by the second processing beam (2) and that then the shaping-out operation is effected by a shaping tool (23) or, in the case of a hollow body whose openings are firstly closed by sealing elements (25, 26, 27), by introducing gas under pressure.

5. A method according to claims 1 to 4 characterised in that for finishing the cut surface of parts which are separated from each other by the first processing beam (1), such as for example glass tubes, the parts are firstly moved to a small spacing from each other and then the cut edges of both parts are simultaneously finished by the second processing beam (2).

6. Apparatus for carrying out the method according to claims 1 to 5 wherein there is a beam generating unit (5) for two processing beams (1, 2) of different radiation properties which are adjustable within wide limits, wherein the first processing beam (1) is sharply focussed and has a high power density while the second processing beam (2) is less focussed or divergent and has a lower power density, characterised by deflection units (11, 17) which permit mutually independent deflection of the two processing beams (1, 2) into an orientation which is parallel to each other or inclined with respect to each other, wherein the orientation can be on to a common or separate processing locations, and having a clamping and positioning unit (4) for the workpiece (3) to be processed.

7. Apparatus according to claim 6 characterised in that the beam generating unit (5) is formed by a laser (10) and the two processing beams (1, 2) are produced by a beam splitting effect, for which purpose there is provided a first interference modulator (11) for splitting into a transmitted and a reflected beam (14, 15), wherein the transmitted beam (14) is reflected by deflection mirrors (12, 13) in a prism-like arrangement and in the opposition direction passes once again through the first interference modulator (11) so that the two beams (14, 15) then include an acute angle between them, that there is also provided a second interference modulator (17) at which the reflected beam (15) after passing through a telescope (16) is reflected again and then forms the second processing beam (2), and that there is provided a deflection mirror (18) by which the doubly transmitted beam (14) is introduced from the other side of the second interference modulator (17) for transmission again, then forming the first processing beam (1), wherein the second interference modulator (17) is mounted tiltably for adjusting the angular position between the two processing beams (1, 2).

8. Apparatus according to claim 7 characterised in that the telescope (16) is variably adjustable for altering the imaging properties.

9. Apparatus according to claim 7 or claim 8 characterised in that a CO₂-laser is used as the laser (10).

10. Apparatus according to one of claims 6 to 9 characterised in that the interference modulator (11, 17) is formed by a Fabry-Perot interferometer.

11. Apparatus according to one of claims 6 to 10 characterised in that to receive the workpieces (3) to be processed there is provided a clamping and positioning unit (4, 4') which permits a rotary and translatory movement and positioning of the workpieces (3) at freely selectable speeds.

12. Apparatus according to claim 11 characterised in that in the case of processing beams (1, 2) which are guided substantially parallel to the clamping axis of the clamping and positioning unit (4) there is provided a deflection mirror (21) which is pivotable into the beam path.

## Revendications

1. Procédé pour le traitement de corps (3) en matériaux solides, en particulier de verre, de préférence de forme tubulaire, pour une application ou une utilisation dans le domaine pharmaceutique, chimique ou vétérinaire, au moyen de rayons de traitement (1, 2) optiques appartenant au domaine visible ou au domaine spectral proche, caractérisé par le fait que pour le tronçonnage, le perçage ou l'enlèvement ciblé de matière, on utilise un premier rayon de traitement (1) focalisé de manière adaptée et présentant une forte densité d'énergie, par le fait que pour le façonnage, la fusion ou le traitement thermique on utilise un second rayon de traitement (2) avec une densité d'énergie plus faible, le second rayon de traitement (2), conformément à l'application, étant moins fortement focalisé ou étant divergent, et par le fait que les deux rayons de traitement (1, 2) peuvent être réglés à l'aide d'unités de déviation (11, 17) afin qu'ils frappent le corps en de mêmes points ou en des points différents, en étant parallèles ou en formant un angle entre eux.

2. Procédé selon la revendication 1, caractérisé par le fait qu'on enregistre les interactions aux points de traitement concernés et on les utilise pour commander les paramètres de fonctionnement des deux rayons de traitement ainsi que d'une unité de bridage et de positionnement (4).

3. Procédé selon la revendication 2, caractérisé par le fait que l'on détecte les interactions par enregistrement du rayonnement optique émis.

4. Procédé selon les revendications 1 à 3, caractérisé par le fait que pour façonner des formes convexes, on réchauffe jusqu'à la plasticité le matériau dans la région de la zone de traitement (22), à l'aide du second rayon de traitement (2), puis on réalise la forme convexe à l'aide d'un outil de façonnage (23) ou, dans le cas d'un corps creux dont les ouvertures ont été préalablement obturées à l'aide d'éléments d'étanchéité (25, 26, 27), en appliquant un gaz sous pression.

5. Procédé selon les revendications 1 à 4, caractérisé par le fait que pour usiner la surface de coupe d'éléments qui ont été séparés au moyen du premier rayon de traitement (1), comme par exemple des tubes de verre, on dispose ceux-ci à faible distance l'un de l'autre puis on usine les bords de coupe des deux éléments simultanément au moyen du second rayon de traitement (2).

6. Dispositif pour la mise en oeuvre du procédé selon les revendications 1 à 5, avec une unité de production de rayons (5) pour deux rayons de traitement (1, 2), présentant des caractéristiques de rayonnement différentes, réglables à l'intérieur de limites larges, le premier rayon de traitement (1) étant fortement focalisé et présentant une densité d'énergie élevée, tandis que le second rayon de traitement (2) est moins fortement focalisé ou est divergent et présente une densité d'énergie plus faible, caractérisé par des unités de déviation (11, 17) qui permettent de dévier les deux rayons de traitement (1, 2) indépendamment l'un de l'autre, avec une orientation mutuellement parallèle ou avec une inclinaison réciproque, les rayons pouvant être dirigés sur un point de traitement commun ou sur des points de traitement distincts, et caractérisé par une unité de bridage et de positionnement (4) pour le corps (3) à traiter.

7. Dispositif selon la revendication 6, caractérisé par le fait que l'unité de production de rayons (5) est constituée d'un laser (10) et que les deux rayons de traitement (1, 2) sont produits par une division du rayon, un premier modulateur à interférence (11) étant prévu pour réaliser la séparation en un rayon transmis et un rayon réfléchi (14, 15), le rayon transmis (14) étant réfléchi à l'aide de miroirs de déviation (12, 13) disposés en prisme et traversant une nouvelle fois le premier modulateur à interférence (11) dans la direction opposée, de manière telle que les deux rayons (14, 15) forment angle aigu entre eux, par le fait qu'il est prévu un second modulateur à interférence (17) au niveau duquel le rayon réfléchi (15), après avoir traversé un télescope (16), subit une nouvelle réflexion et forme le second rayon de traitement (2) et par le fait qu'il est prévu un miroir de déviation (18) par lequel le rayon (14) transmis deux fois est renvoyé côté autre face du second modulateur à interférence (17) pour une nouvelle transmission, lequel rayon forme ainsi le premier rayon de traitement (1), le second modulateur à interférence (17) étant monté pivotant afin de régler la position angulaire entre les deux rayons de traitement (1, 2).

8. Dispositif selon la revendication 7, caractérisé par le fait que le télescope (16) est réglable afin de modifier les caractéristiques de reproduction.

9. Dispositif selon la revendication 7 ou 8, caractérisé par le fait que l'on utilise un laser à CO₂ comme laser (10).

10. Dispositif selon une des revendications 6 à 9, caractérisé par le fait que le modulateur à interférence (11, 17) est formé d'un interféromètre de Fabry-Perot.

11. Dispositif selon une des revendications 6 à 10, caractérisé par le fait qu'il est prévu pour recevoir les corps à traiter (3) une unité de bridage et de positionnement (4, 4') qui permet un mouvement de rotation et de translation des corps (3) avec des vitesses qui peuvent être choisies librement.

12. Dispositif selon la revendication 11, caractérisé par le fait que, les rayons de traitement (1, 2) étant essentiellement parallèles à l'axe de bridage de l'unité de bridage et de positionnement, il est prévu un miroir de déviation (21) qui peut être amener par pivotement sur le trajet des rayons.
